Europäisches Patentamt

(19) European Patent Office

Office européen des brevets

(11) Numéro de publication: **0 099 824**
**B1**

(12) # FASCICULE DE BREVET EUROPÉEN

(45) Date de publication du fascicule du brevet:
15.10.86

(21) Numéro de dépôt: **83401458.1**

(22) Date de dépôt: **13.07.83**

(51) Int. Cl.⁴: **A 23 K 1/00,** A 23 K 1/04, A 23 K 1/08, A 23 K 1/18, A 01 K 61/02 // A23K3/00, A01K97/04

(54) **Procédé de production, à partir de tourteaux d'origine végétale, d'une composition pour la fabrication d'aliments pâteux pour animaux, aliments ainsi obtenus et distributeur pour ces aliments.**

(30) Priorité: **13.07.82 FR 8212272**

(43) Date de publication de la demande:
**01.02.84 Bulletin 84/5**

(45) Mention de la délivrance du brevet:
**15.10.86 Bulletin 86/42**

(84) Etats contractants désignés:
**AT BE CH DE GB IT LI LU NL SE**

(56) Documents cité:
**FR-A-2 128 912**
**US-A-3 846 931**

**ALIMENTATION ET LA VIE, vol. 62, no. 3, 1974, pages 165-179, Paris, FR., T. STARON: "La détoxification des tourteaux de colza par voie biologique"**

(73) Titulaire: **AQUAVETO S.a.r.l., Moulin du Boutet Saint- Hilaire- Sur- Erre, F-61340 Noce (FR)**

(72) Inventeur: **Gerard, Jean- Pierre, Moulin du Boutet Saint- Hilaire- Sur- Erre, F-61340 - Noce (FR)**

(74) Mandataire: **Sauvage, Renée, CABINET SAUVAGE 100 bis, avenue de Saint- Mandé, F-75012 Paris (FR)**

## Description

La présente invention à pour objet un procédé de production, à partir de tourteaux d'origine végétale, d'une composition utilisable dans la fabrication d'aliments pâteux pour animaux.

On a déjà tenté d'utiliser des tourteaux d'origine végétale dans la fabrication d'aliments pour animaux et notamment pour les poissons de pisciculture.

Jusqu'ici, cependant, les efforts ont tendu vers la réalisation de produits secs obtenus par voie de séchage par atomisation (voir à cet égard le document FR-A-2 128 912). Ces procédés, en dépit de la concentration due au séchage, ne permettent pas d'obtenir des teneurs en matières protéiques suffisantes et, pour augmenter ces teneurs, il est d'usage d'ajouter de la farine de poisson -ce qui est pour le moins paradoxal puisque cela revient à élever des poissons aux dépens du produit de la pêche. Au surplus, après le séchage qui consomme une grande quantité d'énergie, il est nécessaire de réhydrater les aliments avant de les donner, en particulier, aux poissons d'eau de mer, lesquels présentent des besoins en eau douce.

Il était donc souhaitable d'apporter une composition ayant une teneur convenable en matières protéiques, utilisable sans opération de séchage et apportant l'eau voulue aux animaux qui doivent en trouver dans leur alimentation.

Une telle composition a été mise au point selon l'invention en mélangeant des tourteaux de soja, de colza ou d'un végétal équivalent du lactoserum et du sang, en ensemençant le mélange à l'aide d'une levure de type Geotrichum candidum et en faisant macérer l'ensemble à environ 37°C, sous agitation jusqu'à l'obtention d'une pâte.

L'adjonction de lactosérum et de sang fournit un apport de protéines et d'eau d'autant plus intéressant qu'il s'agit de produits jusqu'ici inutilisés et même indésirables puisque l'un et l'autre sont des facteurs de pollution dont le rejet des fromageries ou des abattoirs est soumis à une règlementation sévère et à paiement de taxes.

Il avait certes déjà été envisagé d'utiliser du sang d'abattoir dans la préparation d'aliments pour animaux mais le taux élevé en leucine du sang, causant de graves troubles rénaux, y faisait obstacle. Au surplus, il était nécessaire d'ajouter aux aliments des conservateurs pour éviter que le sing de dégrade.

Il a été constaté, de manière surprenante, que le procédé selon l'invention, d'une part, fait chuter la teneur en leucine à une valeur compatible avec l'utilisation du sang comme composant d'aliments pour animaux, d'autre part, stabilise le sang sans adjonction de conservateur.

La composition résultante peut ainsi être stockée sans avoir recours à l'addition d'un agent conservateur, pendant plusieurs mois à + 4°C ou plusieurs semaines hors de la chambre froide, étant entendu toutefois qu'elle doit être à l'abri de l'air.

Le procédé selon l'invention constitue donc également un procédé de conservation ou d'ensilage du sang.

On notera incidemment qu'il a été constaté qu'appliqué à du sang dont la dégradation a commencé, le procédé selon l'invention stoppe cette dégradation sans, bien entendu, rétablir le sang dans son état antérieur.

Le microorganisme employé pour la macération du mélange tourteau/lactosérum/sang est la levure Geotrichum candidum.

Dans une forme d'exécution préférée, le melange soumis à macération renferme environ de 40 à 43 % de lactosérum, de 32 à 35 % de sang et de 22 à 26 % de tourteau.

Par macération effectuée au voisinage de 37 °C, pendant environ trente heures, sous agitation, on obtient une composition pâteuse de teinte rouge ayant la consistance d'un fromage et à partir de laquelle on peut préparer des aliments pour animaux.

A cette fin, on y ajoute, selon les animaux envisagés, un apport d'amidon, de protéines, de sels minéraux, de matières grasses et de vitamines dans les conditions habituelles, étant toutefois entendu que l'adjonction de matière protéique, et notamment de farine de poisson, est le plus souvent moitié moindre que dans la technique antérieure.

L'aliment prêt à l'emploi a la consistance d'une pête de teinte rouge que l'on distribue aux animax sous la forme la mieux appropriée au cas d'espèce.

S'agissant de poissons, batraciens ou crustacés, la pâte est distribuée à l'aide d'un appareil extrudeur que l'on décrira plus loin, qui débite de petits boudins ayant l'aspect et la couleur de vers très attractifs.

A peine tombés dans l'eau, les petits boudins sont happés par les poissons à comportement vorace, tels que les truites.

Dans le cas de poissons ou crustacés plus lents à s'alimenter, tels que les turbots, les soles, les écrevisses, etc..., il est préférable de faire entrer dans la composition de l'aliment une quantité efficace d'un agent agglomérant constitué de gélatine, de graisse, d'autolysat de poisson et/ou de lécithine de soja. Cela évite que les boudins ne se délitent trop rapidement dans l'eau et la souillent.

Ce mode d'exécution de l'aliment est également souhaitable lorsqu'il s'agit de nourrir des poissons d'agréement, la limpidité de l'eau de l'aquarium étant un facteur essentiel à respecter.

Pour distribuer l'aliment pâteux en lui donnant un aspect apétissant et sans que le pisciculteur ait à se salir les mains, il est avantageux de conditionner l'aliment dans une gaine tubulaire en matière souple et résistante qui présente à l'une de ses extrémités une languette de traction et, à l'écart de cette extrémité, au moins un orifice de distribution bouché par une bande adhésive détachable.

Un distributeur comprenant des moyens de compression entre lesquels la languette de la gaine peut être enfilée et tirée, soumet la gaine à une pression interne qui contraint l'aliment à s'échapper par le ou les trous de distribution, une fois détachée la bande adhésive.

Dans une forme d'exécution préférée, la gaine en position d'usage est disposée horizontalement et elle comporte une série d'orifices de distribution occupant la zone inférieure de sa périphérie.

Cela permet de distribuer simultanément une multitude de petits boudins d'aliment.

Lorsqu'il s'agit de nourrir des poissons d'agréement en aquarium, l'aliment peut être distribué à l'aide d'une seringue genre seringue à mammite ou d'un injecteur tels que ceux utilisés pour distribuer les produits d'étanchéité aux silicones ou encore être conditionné en tube comprimable à embout.

L'aliment selon l'invention convient en particulier:

- aux poissons de pisciculture et de fermes marines (truites, soles, turbots, anguilles, etc.)
- aux poissons et bactraciens élevés à des fins d'études scientifiques
- aux grenouilles destinées à l'alimentation humaine
- aux crustscés en général, notamment aux écrevisses et aux homards
- aux poissons d'agréement
- aux carnivores d'élevage, tels que les visons qui autrement consomment une grande quantité poisson frais.

Il peut également servir d'amorce et d'appât pour la péche. Dans ce cas, on augmente le taux d'agent agglomérant pour conserver le plus longtemps possible leur forme aux "vers artificiels" créés selon l'invention.

L'invention est décrite avec plus de détails dans les exemples ci-dessous.

**Exemple 1**

Préparation d'un aliment pour truite

La préparation comporte trois étapes:
- la culture du microorganisme choisi pour la macération
- la macération effectuée à l'aide de ce microorganisme, débouchant sur l'obtention d'un "fromage"
- la formulation de l'aliment à partir de ce fromage

a) Culture de la levure

On ensemence stérilement 500 ml d'une culture de 48 heures du microorganisme choisi qui est une levure de type Geotrichum candidum dans 4,51 de milieu de culture de Sabouraud stérile ou d'un milieu équivalent contenu dans un Erlenmeyer, on bouche au coton et on cultive pendant 48 heures sous agitation à la température convenant habituellement au microorganisme, soit 26°C dans l'exemple choisi.

b) Macération du mélange tourteau/lactosérum/sang

Dans une cuve à agitation du type yaourtiére à double paroi, on introduit un mélange formé en poids de:

40 - 43 % de lactosérum de fromagerie frais

32 - 35 % de sang non battu (caillot et sérum)

22 - 26 % de tourteau de soja toasté moulu fin

et on l'ensemence à l'aide de 13,5 1 de la culture de 48 heures obtenue à l'étape a).

La double paroi de la cuve est parcourue d'un courant d'eau chaude qui assure une température de 37°C dans la masse.

On laisse cultiver pendant 30 heures. Le pH qui est initialement d'environ 7,2 chute à environ 5 au cours des premières 14 heures.

Il semble que ce pH acide soit responsable des qualités de conservation de la composition issue de l'étape de maceration, laquelle se présente sous la forme d'un fromage rouge.

Ce fromage rouge peut être conservé tel quel pendant au moins 4-5 mois à + 4°C, à l'abri de l'air.

c) formulation de l'aliment

Le fromage rouge, quoique d'une composition nettement plus intéressante que celle des produits antérieurement obtenus à partir des tourteaux végétaux, nécessite d'être formulée avec différents additifs pour ajuster sa teneur en amidon, en protéines, en sels minéraux et en matières grasses aux besoins des animaux.

Ainsi, pour les truites, on mélange:
- 70 % de fromage rouge
- 14 % de mais extrudé
- 10 % de farine de poisson
- 4,60 % d'huile de poisson
- 1 % de mélange vitamimique
- 0,15 % de vitamine C
- 0,3 % de méthionine.

L'aliment résultant a une teneur en protéines de l'ordre de 38-40 % pour une adjonction en farine de poisson de l'ordre de 10 % alors que, selon l'art antérieur, il était nécessaire d'en ajouter 45 à 50 %.

Il se présente sous la forme d'une pâte rouge que l'on conditionne dans un emballage étanche à l'air, de préférence une gaine tubulaire en polypropylène ou autre matière plastique équivalente que l'on décrira plus loin en détail.

**Exemple 2**

Préparation d'un aliment pour alevins de salmonidés

A partir d'un fromage rouge obtenu comme à l'exemple 1, on prépare la formulation suivante:
- 69 % de fromage rouge
- 4 % de mais
- 20 % de farine de poisson
- 6 % de graisses
- 1 % de mélange vitaminique

Les graisses ajoutées sont constituées d'un mélange d'huile de poisson et de lécithine de soja.

La formulation est ensuite conditionnée comme indiquée dans l'exemple 1.

**Exemple 3**

Préparation d'un aliment pour turbots

On formule l'aliment de façon qu'il renferme 62 % de fromage rouge et 38 % d'un mélange d'additifs ayant la composition suivante:
- 78,00 % de farine de poisson
- 1,50 % de mélange vitaminique
- 16,50 % d'huile de poisson
- 4,00 % de lécithine de soja

A la formulation obtenue, on ajoute 5 % d'un agent agglomérant constitué de gélatine et de graisses végétales. L'agglomérant peut également renfermer de l'autolysat de poisson.

Cet agglomérant convient aussi à la fabrication d'aliments pour soles et écrevisses.

**Exemple 4**

Mode de distribution des aliments

Le mode de distribution est illustré au dessin annexé dans lequel:

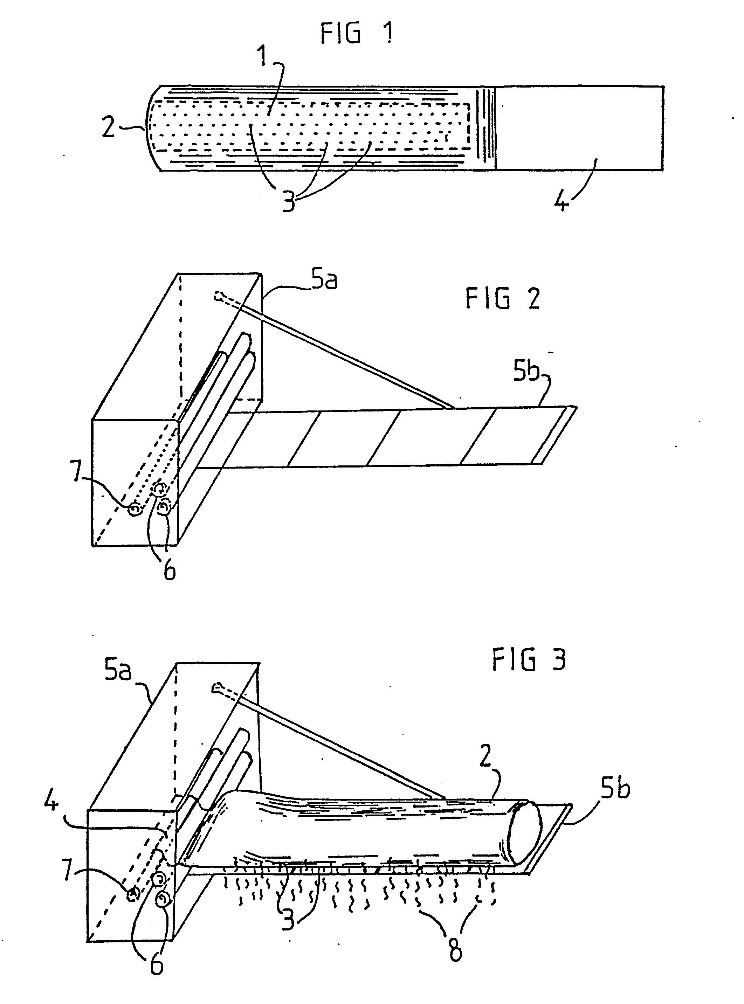

- la figure 1 représente une cartouche d'aliment vue de dessous
- la figure 2 représente l'appareil distributeur
- la figure 3 montre l'appareil distributeur chargé d'une cartouche et en cours d'utilisation

Plus précisement, l'aliment 1 est contenu dans une gaine 2 tubulaire en polypropylène, par exemple de 10-12 cm de diamètre, percée d'orifices de distribution 3 dans la zone inférieure en position d'usage. Ces trous, avant la mise en service de la cartouche d'aliment que constitue l'ensemble gaine/aliment, sont bouchés par un ruban adhésif détachable représenté en pointillés. La gaine 2 comporte une languette de traction 4.

L'appareil distributeur est constitué d'un boîtier 5a ouvert d'un côté et se prolongeant, du côté ouvert, par un support de cartouche en forme d'échelle. Le boîtier 5 renferme deux rouleaux de compression 6 et un axe d'enroulement 7 entraîné par un moteur électrique de 12 V non représenté dont la vitesse de rotation est de quelques tours minutes.

Pour la mise en service de la cartouche 1-2, on enlève le ruban adhésif, installe la cartouche 1-2 dans le support 5b disposé au-dessus de l'eau où évoluent les poissons à nourrir, on glisse la languette 4 entre les rouleaux 6 et lui fait faire quelques tours autour de l'axe 7. Il suffit de mettre le moteur en marche pour que, la languette étant attirée par l'axe 7, l'extrémité de la cartouche vienne s'écraser contre les rouleaux 6 en créant une pression interne qui contraint l'aliment à s'échapper de la gaine par les trous 3 en formant de petits boudins rouges 8 qui se rompent lorsqu'ils atteignent une certaine longueur et tombent dans l'eau en présentant, avec les vers, une ressemblance très attractive pour les poissons.

Une structure similaire peut être conçue pour nourrir des poissons d'agréement en l'absence de leur propriétaire en commandant la mise en marche du moteur à l'aide d'une minuterie ou dispositif analogue.

En conclusion, il apparait que le procédé selon l'invention permet d'obtenir des aliments pâteux, se conservant bien d'eux-mêmes par récupération de produits polluants -sang et lactosérum- apportant une partie des protéines et l'eau nécessaire à l'alimentation des animaux. L'absence d'étape de séchage constitue une économie appréciable qui est loin d'être contrebalancée par le coût supérieur du transport (si l'on considére que l'eau extraite par séchage vaut FF 1,10 / litre, l'eau transportée ne coûte que FF 0,08 / litre) et elle évite d'avoir à réhydrater le produit avant utilisation.

Enfin, la couleur rouge du produit résultant et la forme qu'il est possible de lui donner, sont des facteurs attractifs propres à favoriser l'alimentation.

**Revendications**

1- Procédé de production à partir de tourteaux de soja, de colza ou d'un vegetal equivalent d'une composition utilisable dans la fabrication d'aliments pour animaux, caractérisé en ce qu'il consiste à mélanger lesdits tourteaux à du lactosérum et à du sang, à ensemencer l'ensemble à l'aide d'une levure de type Geotrichum candidum et à le faire macérer à envirou 37° C sous agitation jusqu'à obtention d'une pâte.

2. Procédé de conservation du sang, caractérisé en ce qu'il consiste à le mélanger avec des tourteaux de soja, de colza ou d'un végétal equivalent et du lactosérum, à ensemencer l'ensemble à l'aide d'une levure de type Geotrichum candidum et à le faire macérer à environ 37° C sous agitation jusqu'à l'obtention d'une pâte.

3- Procédé selon la revendication 1 ou 2, caractérisé en ce que le tourteau d'origine végétale est du tourteau de soja.

4- Procédé selon l'une quelconque des revendications 1 à 3, caractérisé en ce que le mélange soumis à macération renferme environ de 40 à 43 % de lactosérum, de 32 à 35 % de sang et de 22 à 26 % de tourteau.

5- Procédé selon l'une quelconque des revendications 1 à 4, caractérisé en ce que la macération est effectuée au voisinage de 37° C, pendant environ 30 heures, sous agitation.

6- A titre de produit industriel nouveau, la composition issue de la mise en oeuvre du procédé selon l'une quelconque des revendications 1 à 5.

7- Aliment paâteux pour poissons, crustacés, batraciens et carnivores, préparé à partir de la composition selon la revendication 6.

8- Aliment pâteux selon la revendication 7, caractérisé en ce qu'il renferme une quantité efficace d'un agent agglomérant constitué de gélatine, de graisse, d'autolysat de poisson et/ou de lécithine.

9- Aliment pâteux selon la revendication 7 ou 8, caractérisé en ce qu'il est obtenu à l'état pâteux et conservé tel quel pour l'emploi.

10- Ensemble de distribution pour l'aliment, pâteux selon la revendication 9, caractérisé en ce qu'il comprend, d'une part, une gaine tubulaire (2) en matière souple et résistante dans laquelle est conditionné l'aliment, laquelle gaine présente à l'une de ses extrémités une languette de traction (4) et, à l'écart de cette extrémité au moins un orifice de distribution (3) et, d'autre part, un distributeur comprenant des moyens de compression (6) entre lesquels la languette (4) peut être enfilée et tirée, soumettant ainsi la gaine (2) à une pression interne qui contraint l'aliment à s'échapper par le ou lesdits orifice(s) (3).

11. Ensemble selon la revendication 10, caractérisé en ce que la gaine (2), en position d'usage, est disposée horizontalement et en ce qu'elle comporte une série d'orifices (3) de distribution occupant la zone inférieure de sa périphérie.


**Patentansprüche**

1. Verfahren zum Erzeugen einer für die Herstellung von Tiernahrungsmitteln verwendbaren Zusammensetzung aus Sojaöl, Rapsöl oder einem äquivalenten Pflanzenöl, dadurch gekennzeichnet, daß man die genannten Öle mit Lactoserum und Blut vermischt, man das Ganze mit einem Hefepilz vom Typ Geotrichum candidum impft und man es bei etwa 37°C unter Umrühren entwässern läßt, bis man eine Paste erhält.

2. Verfahren zum Konservieren von Blut, dadurch gekennzeichnet, daß man es mit Sojaöl, Rapsöl oder einem äquivalenten Pflanzenöl und Lactoserum vermischt, man das Ganze mit einem Hefepilz vom Typ Geotrichum candidum impft und man es bei etwa 37°C unter Umrühren entwässert, bis man eine Paste erhält.

3. Verfahren nach Anspruch 1 oder 2, dadurch gekennzeichnet, daß das Öl pflanzlichen Ursprungs Sojaöl ist.

4. Verfahren nach einem der Ansprüche 1 bis 3, dadurch gekennzeichnet, daß das der Entwässerung unterworfene Gemisch ungefähr 40 bis 43% Lactoserum, 32 bis 35% Blut und 22 bis 26% 01 enthält.

5. Verfahren nach einem der Ansprüche 1 bis 4, dadurch gekennzeichnet, daß die Entwässerung bei etwa 37°C unter Umrühren während etwa 30 Stunden ausgeführt wird.

6. In der Eigenschaft als neues industrielles Produkt die Zusammensetzung, die sich bei der Ausführung des Verfahrens nach einem der Ansprüche 1 bis 5 ergibt.

7. Pastöses Nahrungsmittel für Fische, Krustentiere, Lurche und Fleischfresser, hergestellt aus der Zusammensetzung nach Anspruch 6.

8. Pastöses Nahrungsmittel nach Anspruch 7, dadurch gekennzeichnet, daß es eine wirksame Menge eines Agglomeriermittels enthält, das aus Gelatine, Fett, Fischautolysat und/oder Lezithin besteht.

9. Pastöses Nahrungsmittel nach Anspruch 7 oder 8, dadurch gekennzeichnet, daß man es in pastösem Zustand erhält und daß es in diesem Zustand für den Gebrauch konserviert wird.

10. Vorrichtung zum Abgeben des pastösen Nahrungsmittels nach Anspruch 9, dadurch gekennzeichnet, daß sie enthält: einerseits eine tubusförmige Umhüllung (2) aus weichem und widerstandsfähigem Material, in der das Nahrungsmittel aufbewahrt wird, welche Umhüllung an einem ihrer Enden eine Zuglasche (4) und im Abstand zu diesem Ende wenigstens eine Abgabeöffnung (3) aufweist, und andererseits einen Verteiler, der Druckeinrichtungen (6) aufweist, zwischen die die Lasche (4) eingeführt und gezogen werden kann, wodurch die Umhüllung (2) einem Innendruck unterworfen wird, der das Nahrungsmittel dazu zwingt, durch die Öffnung(en) (3) zu entweichen.

11. Vorrichtung nach Anspruch 10, dadurch gekennzeichnet, daß die Umhüllung (2) in Gebrauchsposition horizontal angeordnet ist und daß sie eine Reihe von Abgabeöffnungen (3) aufweist, die den unteren Bereich ihres Umfangs besetzen.


**Claims**

1. Method of producing, from cakes of soya, colza or an equivalent plant, a composition usable in the manufacture of animal foods, characterized in that it consists in mixing said cakes with lactoserum and blood, in seeding the whole with a yeast of Geotrichum Candidum type and in steeping it at about 37°C with stirring until a paste is obtained.

2. Method of conserving blood, characterized in that it consists in mixing it with cakes of soya, colza or an equivalent plant and lactoserum, in seeding the whole with a yeast of Geotrichum Candidum type, and in steeping it at about 37°C with stirring until a paste is obtained.

3. Method according to claim 1 or 2, characterized in that the cake of plant origin is soya cake.

4. Method according to any one of claims 1 to 3, characterized in that the mixture subjected to steeping contains about 40 to 43% of lactoserum, 32 to 35% of blood and 22 to 26% of cake.

5. Method according to any one of claims 1 to 4, characterized in that steeping is carried out at about 37°C, for about 30 hours, with stirring.

6. By way of novel industrial product, the composition obtained by using the method according to any one of claims 1 to 5.

7. Pasty food for fish, shell-fish batrachians, carnivora prepared from the composition according to claim 6.

8. Pasty food according to claim 7, characterized in that it contains an efficient amount of a binding agent formed of gelatine, fat, fish autolysate and/or lecithin.

9. Pasty food according to claim 7 or 8, characterized in that it is obtained in the pasty state and kept as such for use.

10. A dispensing assembly for the pasty food according to claim 9, characterized in that it comprises, on the one hand, a tubular sheath (2) made from a flexible and resistant material in which the food is packed, which sheath has at one of its ends a pull tongue (4) and spaced apart from this end at least one dispensing orifice (3) and, on the other hand, a dispenser comprising compression means (6) between which the tongue (4) may be engaged and pulled, thus subjecting the sheath (2) to an internal pressure which forces the food through said orifice or orifices (3).

11. Assembly according to claim 10, characterized in that the sheath (2), in the position of use, is disposed horizontally and in that it comprises a series of dispensing orifices (3) occupying the lower zone of its periphery.

## FIG 1

## FIG 2

## FIG 3